# EUROPÄISCHE PATENTSCHRIFT

(11) **EP 1 711 298 B1**
(45) Veröffentlichungstag und Bekanntmachung des Hinweises auf die Patenterteilung: **22.10.2008**
(21) Anmeldenummer: 05707078.1
(22) Anmeldetag: 28.01.2005
(51) Int. Cl.: B23K 1/00, B23K 1/002, B23K 1/005, F01D 5/00, B23P 6/00

(54) **REPARATUR-LOTVERFAHREN ZUM REPARIEREN EINES BAUTEILS, WELCHES EIN BASISMATERIAL MIT EINER GERICHTETEN MIKROSTRUKTUR UMFASST**
PROCESS OF BRAZING REPAIRING OF A PART HAVING A BASE MATERIAL WITH ORIENTED MICROSTRUCTURE
PROCEDE DE REPARATION PAR BRASAGE D'UNE PIECE AYANT UN MATERIAU DE BASE AVEC UNE MICROSTRUCTURE ORIENTEE

(30) Priorität: 03.02.2004 EP 04002332
(43) Veröffentlichungstag der Anmeldung: 18.10.2006
(73) Patentinhaber: SIEMENS AKTIENGESELLSCHAFT, 80333 München (DE); MTU Aero Engines GmbH, 80995 München (DE)
(72) Erfinder: GOLDSCHMIDT, Dirk, 47445 Moers (DE); OECHSNER, Matthias, 45481 Mülheim a.d. Ruhr (DE); OTT, Michael, 45478 Mülheim a.d. Ruhr (DE); PAUL, Uwe, 40882 Ratingen (DE); PICKERT, Ursula, 45470 Mülheim a.d. Ruhr (DE); SCHUMANN, Eckart, 45481 Mülheim a.d. Ruhr (DE); SEILER, Beate, 9170 Sint-Gillis-Waas (BE); SINGER, Robert, 91054 Erlangen (DE); STEINBACH, Jan, 13353 Berlin (DE); VOLEK, Andreas, 91056 Erlangen (DE); VOSBERG, Volker Richard, 45476 Mülheim a.d. Ruhr (DE)
(86) Internationale Anmeldenummer: PCT/EP2005/000884
(87) Internationale Veröffentlichungsnummer: WO 2005/075136

(56) Entgegenhaltungen:
- EP-A- 1 258 545
- US-A- 4 705 203
- US-A- 5 628 814
- US-A- 6 050 477
- US-A1- 2003 075 587

## Beschreibung

Die vorliegende Erfindung betrifft ein Reparaturverfahren zum Reparieren eines Bauteils, welches ein Basismaterial mit einer gerichteten Mikrostruktur umfasst, sowie ein Bauteil mit einem Basismaterial, welches eine gerichtete Mikrostruktur aufweist gemäß dem Oberbegriff des Anspruchs 1 (siehe, z.B., US 6 050 477 A).

Beispielsweise Bauteile von Turbinen sind heutzutage nicht selten aus Materialien mit einer gerichteten Mikrostruktur hergestellt. Als Materialien mit einer gerichteten Mikrostruktur sollen hierbei insbesondere einkristalline Materialien und Materialien, die eine Kornstruktur aufweisen, wobei die Ausdehnung der Körner eine gemeinsame Vorzugsrichtung aufweist, anzusehen sein. Z.B. können die Körner in einer bestimmten Vorzugsrichtung eine größere Abmessung aufweisen, als in den übrigen Richtungen. Bauteile mit einer derartigen Kornstruktur werden auch als direktional erstarrte Bauteile (directional solidified) bezeichnet.

Stark belastete Bauteile, wie etwa Turbinenschaufeln, unterliegen während des Betriebs einer hohen thermischen und mechanischen Beanspruchung, die zu Materialermüdungen und infolgedessen zu Rissen führen kann. Da das Herstellen von Bauteilen aus Basismaterialien, welche eine gerichtete Mikrostruktur aufweisen, relativ kostspielig ist, ist man in der Regel bemüht, derartige Bauteile nach Eintritt von Schädigungen zu reparieren. Damit wird die Funktionstüchtigkeit wieder hergestellt und das Bauteil für eine weitere Revisionsperiode einsetzbar.

Eine Möglichkeit der Reparatur beschädigter Bauteile ist beispielsweise das Löten. Bei diesem Löten wird ein Lot im Bereich der Beschädigung auf das Material des Bauteils, also auf das Basismaterial, aufgebracht und mittels Wärmeeinwirkung mit dem Basismaterial verbunden. Nach dem Löten weist das Lotmaterial jedoch bei der bisher üblichen Verfahrensweise keine einkristalline oder direktional erstarrte Struktur auf. Eine ungeordnete Struktur besitzt jedoch im Vergleich zu einer gerichteten Mikrostruktur schlechtere Materialeigenschaften - vor allem im Hochtemperaturbereich -, sodass die Lötstelle schlechtere Materialeigenschaften als das umgebende Basismaterial aufweist.

Zum Reparieren von beschädigten Bauteilen mit einer gerichteten Mikrostruktur stehen Schweißverfahren zur Verfügung, mit denen auch gerichtete Mikrostrukturen in den verschweißten Strukturen erzeugt werden können. Ein derartiges Verfahren ist beispielsweise in EP 089 090 A1 offenbart.

Weitere Verfahren bzw. zu verwendende Lotpulver sind bekannt aus den Publikationen US 6,283,356, US 4,705,203, US 4,900,394, US 6,565,678, US 4,830,934, US 4,878,953, US 5,666,643, US 6,454,885, US 6,503,349, US 5,523,170, US 4,878,953, US 4,987,736, US 5,806,751, US 5,783,318, US 5, 873, 703.

Die US-PS 6,050,477 offenbart ein Verfahren zum Verbinden zweier Bauteilelemente, wobei das Lot großflächig zwischen den beiden Bauteilkomponenten aufgebracht wird und ein Temperaturgradient benutzt wird, um dieselbe gerichtete Mikrostruktur zu erzeugen.

Die US-PS 2003/0075587 A1 offenbart ein Reparaturverfahren eines Bauteils mit einer gerichtet erstarrten Mikrostruktur, wobei jedoch die zu reparierende Stelle nicht dieselbe Mikrostruktur wie das zu reparierende Bauteil aufweist.

Die US-PS 6,495,793 offenbart ein Reparaturverfahren für nickelbasierte Superlegierungen, bei dem ein Laser verwendet wird, wobei der Laser das Material, dass über einen Materialförderer zugeführt wird, aufschmilzt. Eine Aussage über die Mikrostruktur des Bauteils oder der Reparaturstelle wird nicht getroffen.

Die EP 1 258 545 A1 offenbart ein Lötverfahren ohne Temperaturgradienten.

Die EP 1 340 567 A1 offenbart ein Verfahren, bei dem zusätzliches Material zu der bereits aufgeschmolzenen zu reparierenden Stelle zugefügt wird. Es wird ebenfalls ein Temperaturgradient verwendet, um die Bauteile mit gerichteter Mikrostruktur zu behandeln.

Die US-PS 4,878,953 offenbart ein Verfahren zur Reparatur eines Bauteils mit gerichteter Mikrostruktur, bei dem Material auf die reparierende Stelle mittels Pulver aufgetragen wird und diese Stelle eine feinkörnige Mikrostruktur aufweist.

Schweißverfahren schmelzen jedoch das Basismaterial des zu reparierenden Bauteils auf. Strukturell tragende Bereiche eines Bauteils dürfen daher nicht geschweißt werden, da aufgrund des Aufschmelzens des Basismaterials die Integrität der gerichteten Struktur verloren ginge. Deshalb werden Bauteile mit einer gerichteten Mikrostruktur nur dann mittels der Schweißverfahren repariert, wenn sich die Beschädigungen nicht in strukturell tragenden Bereichen des Bauteils befinden. Befindet sich dagegen eine Beschädigung in einem strukturell tragenden Bereich des Bauteils so wird, falls eine gerichtete Schweißstruktur verlangt wird, dieses Bauteil als nicht reparierbar deklariert und gegen ein intaktes Bauteil ausgetauscht.

Aufgabe der Erfindung ist es daher, ein Reparaturverfahren zur Verfügung zu stellen, mit dem beschädigte Bauteile, welche ein Basismaterial mit einer gerichteten Mikrostruktur umfassen, auch dann repariert werden können, wenn sich die Beschädigung in einem strukturell tragenden Bereich des Bauteils befindet.

Die Aufgabe wird durch ein Reparaturverfahren nach Anspruch 1 gelöst. Die abhängigen Ansprüche enthalten vorteilhafte Ausgestaltungen der vorliegenden Erfindung.

In einem erfindungsgemäßen Reparaturverfahren zum Reparieren eines Bauteils, welches ein Basismaterial mit einer gerichteten Mikrostruktur umfasst, erfolgt die Reparatur derart, dass die reparierte Stelle eine entsprechend gerichtete Mikrostruktur wie das umgebende Basismaterial aufweist. Das Basismaterial kann dabei insbesondere ein Material auf Nickelbasis sein. Im erfindungsgemäßen Verfahren wird ein Lot im Bereich einer zu reparierenden Stelle aufgebracht und mittels Wärmeeinwirkung mit dem Bauteil verlötet. Während der Wärmeeinwirkung wird dabei ein Temperaturgradient, d.h. ein Temperaturverlauf von einer höheren zu einer niedrigeren Temperatur, im Bereich der zu reparierenden Stelle erzeugt.

Beim Lötprozess wird nur das Lot, nicht aber das Basismaterial, aufgeschmolzen und wieder erstarrten gelassen, wobei das Lot eine Verbindung mit dem Basismaterial eingeht, so dass das erfindungemäße Reparaturverfahren auch in strukturell tragenden Bereichen des Bauteils zur Anwendung kommen kann, ohne die guten Materialeigenschaften des Basismaterials zu beeinträchtigen. Mittels des Temperaturgradienten lässt sich ein epitaktisches Anwachsen und Erstarren des Lotes erzielen, also ein Wachstum, in welchem die kristalline Orientierung des Lots beim Erstarren von der des Substrates, also des Basismaterials, bestimmt wird. Der Temperaturgradient ermöglicht daher das Entstehen eines einkristallinen Lotbereiches oder einer anderen gerichteten Mikrostruktur im verlöteten Lot mit gegenüber einer ungerichteten Mikrostruktur ähnlich verbesserten Werkstoffeigenschaften. Das gerichtete Wachstum erfolgt dabei in Richtung des Temperaturgradienten, also in Richtung von der niedrigeren zu der höheren Temperatur. Aufgrund des gerichteten Wachstums und der daraus resultierenden gerichteten Mikrostruktur weist das verlötete Lot ähnlich gute Materialeigenschaften wie das Basismaterial des Bauteils auf.

Vorzugsweise wird der Temperaturgradient im erfindungsgemäßen Reparaturverfahren derart erzeugt, dass er in Richtung der Orientierung der gerichteten Mikrostruktur des Basismaterials des Bauteils verläuft. Auf diese Weise lässt sich ein gerichtetes Wachstum des sich verfestigenden Lots in Richtung der Orientierung der gerichteten Mikrostruktur des Basismaterials erreichen.

In einer vorteilhaften Weiterbildung des erfindungsgemäßen Reparaturverfahrens weist das Lot einen ersten Bestandteil mit einer Schmelztemperatur, die niedriger ist, vorzugsweise deutlich niedriger, als die Schmelztemperatur des Basismaterials des Bauteils und einen zweiten Bestandteil mit einer hohen Festigkeit und einer Schmelztemperatur, die über der Schmelztemperatur des ersten Bestandteils aber unterhalb der Schmelztemperatur bis hin zur Schmelztemperatur des Basismaterials liegt, auf. Das Lot wird in dieser Weiterbildung des Verfahrens derart im Bereich der zu lötenden Stelle aufgebracht, dass der Anteil an erstem Bestandteil im Lot in der örtlichen Nähe des Basismaterials höher ist als in einem vom Basismaterial weiter entfernten Bereich. In dieser Ausgestaltung des Verfahrens dient der erste Bestandteil mit der niedrigen Schmelztemperatur dazu, die Verbindung des Lots mit dem Basismaterial herzustellen, während der Bestandteil mit der hohen Schmelztemperatur für die Widerstandsfähigkeit (Festigkeit)des verlöteten Lots sorgt. Dadurch, dass das Lot im Bereich des Basismaterials einen höheren Anteil des ersten Bestandteils umfasst, lässt sich eine gute Verbindung des verlöteten Lots mit dem Basismaterial herstellen. Andererseits ist in Bereichen, die eine größere Entfernung vom Basismaterial aufweisen, verhältnismäßig mehr an zweitem Bestandteil, also am Bestandteil mit der höheren Widerstandsfähigkeit, vorhanden, sodass die beim späteren Betrieb des Bauteils einer stärkeren Belastung ausgesetzten Bereiche der Lötstelle eine hohe Widerstandsfähigkeit aufweisen.

In einer Weiterbildung des erfindungsgemäßen Reparaturverfahrens kann eine Wärmebehandlung des Basismaterials in den Prozess des Verlötens des Lotes integriert sein. Dadurch lässt sich gleichzeitig mit dem Reparieren ein Wiederaufbereiten (Rejuvenation) der Basismaterialeigenschaften realisieren.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Zeichnungen.
- Fig. 1a - 1c: zeigen ein Ausführungsbeispiel für das erfindungsgemäße Reparaturverfahren.
- Fig. 2: zeigt eine Abwandlung des Ausführungsbeispiels.

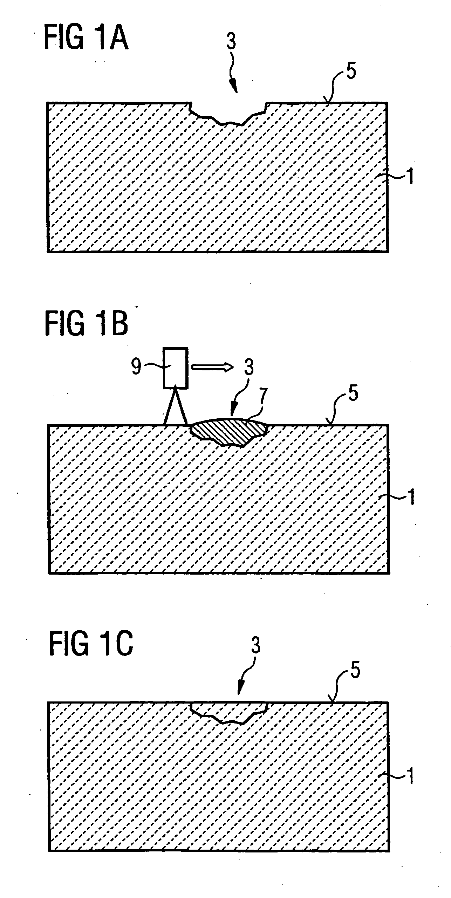

In Figur 1a ist in schematischer Ansicht ein beschädigtes Bauteil 1 dargestellt.

Das Basismaterial des Bauteils 1 umfasst eine Legierung auf Nickelbasis und weist eine gerichtete Mikrostruktur, die in den Figuren durch kurze diagonal verlaufende Striche angedeutet ist, auf. Die Beschädigung 3 des Bauteils 1 befindet sich im Bereich der Oberfläche 5 und ist in der Figur als Vertiefung dargestellt.

Zum Reparieren des geschädigten Bauteils 1 wird ein Lot 7, das im vorliegenden Ausführungsbeispiel in Pulverform vorliegt, auf die die vorgereinigte beschädigte Stelle 3 aufgebracht und anschließend mittels Wärmeeinwirkung mit dem Basismaterial des Bauteils 1 verlötet (Fig. 1b).
Insbesondere wird das gesamte benötigte Lot 7 in die vorgereinigte beschädigte Stelle 3 ggf. mit einem kleinen Überschuss eingebracht und insbesondere nicht während des Aufschmelzens schrittweise hinzugeführt.
Dabei ist es vorteilhaft, wenn die Materialzusammensetzung des Lotes der des Bauteils ähnlich ist. Insbesondere muss das Lot 7 jedoch einen Bestandteil umfassen, dessen Schmelztemperatur niedriger ist, als die Schmelztemperatur des Basismaterials des Bauteils 1, damit mittels der Wärmeeinwirkung ein Aufschmelzen des Lotes 7, nicht jedoch des Basismaterials des Bauteils 1 erfolgt.

Um die Wärmeeinwirkung auf das Lot 7 zu verwirklichen, ist im vorliegenden Ausführungsbeispiel ein Laser 9 vorhanden, welcher das aufzuschmelzende Lot bestrahlt und ihm so die zum Schmelzen nötige Wärme zuführt.

Erfindungsgemäß (siehe Anspruch 1) wird während des Lötvorgangs gezielt in Vorzugsrichtung der Mikrostruktur des Basismaterials ein Temperaturgradient im Bereich der Beschädigung 3 hergestellt. Das Herstellen des Temperaturgradienten kann dabei erfolgen, indem das Bauteil 1 und der Laser 9 relativ zueinander bewegt werden. Im Ausführungsbeispiel wird daher der Laser parallel zur Oberfläche 5 über das Lot 7 geführt. Die Geschwindigkeit, mit der das Führen des Lasers 9 über das Lot 7 erfolgt, ist dabei derart gewählt, dass sich der gewünschte Temperaturgradient im Bereich der Beschädigung 3, d.h. im Lot 7, einstellt. Der Temperaturgradient induziert dabei das Entstehen einer epitaktisch gerichteten Mikrostruktur, wenn das durch den Laser 9 aufgeschmolzene Lot 7 wieder erstarrt. Die Steilheit des Temperaturgradienten kann dabei beispielsweise durch die Geschwindigkeit, mit der Laser 9 und Bauteil 1 relativ zueinander bewegt werden, oder die Laserleistung eingestellt werden. Unter der Steilheit des Gradienten ist hierbei die Zu- oder Abnahme der Temperatur pro Längeneinheit zu verstehen. Die Steilheit des Temperaturgradienten, die zum Entstehen einer gerichteten Mikrostruktur im sich verfestigenden Lot führt, hängt dabei von der Zusammensetzung des Lotes ab.

Im vorliegenden Ausführungsbeispiel erstreckt sich die Vorzugsrichtung der gerichteten Mikrostruktur im Basismaterial des Bauteils 1 innerhalb der Zeichenebene von links nach rechts. Um im erstarrenden Lot 7 das Entstehen einer gerichteten Mikrostruktur zu induzieren, deren Vorzugsrichtung mit der im Basismaterial übereinstimmt, erfolgt die Bewegung des Lasers 9 relativ zum Bauteil 1 parallel zur Vorzugsrichtung der gerichteten Mikrostruktur des Basismaterials.

Figur 1c zeigt das Bauteil 1 nach dem Reparieren der Beschädigung 3. Wie durch die diagonal verlaufenden Striche im Bereich des nun verfestigten Lots 7 angedeutet ist, weist das verfestigte Lot 7, also das Reparaturmaterial, eine gerichtete Mikrostruktur auf, welche dieselbe Vorzugsrichtung wie die gerichtete Mikrostruktur des Basismaterials des Bauteils 1 besitzt.

Ebenso gemäß der Erfindung (siehe Anspruch 1) kann der Laser 9 mit seinen Laserstrahlen so aufgeweitet sein, dass er beispielsweise das gesamte Lot bestrahlt und jedenfalls dadurch ganz erwärmt.
Ein Verfahren des Lasers ist also nicht unbedingt notwendig. Durch die Abfuhr von Wärme des Lots 7 in das Substrat des Bauteils 1 entsteht innerhalb des Lots 7 ein Temperaturgradient. An der äußeren Oberfläche des Lots 7 ist die Temperatur am höchsten und an der Grenzfläche des Lots 7 zu dem Substrat des Bauteils 1 hin ist es kälter. Ggf. kann das Bauteil 1 auf der Rückseite, der Beschädigung 3 gegenüber oder irgendwo sonst gekühlt oder erwärmt werden, um einen gewünschten bestimmten Temperaturgradienten in Abhängigkeit von der Geometrie des Bauteils 1 und der Beschädigung 3 einzustellen.

Im vorliegenden Ausführungsbeispiel wird zum Zuführen der Wärme ein Laser 9 verwendet.

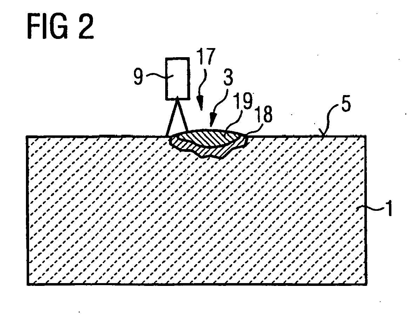

Eine Abwandlung des mit Bezug auf die Figuren 1a bis 1c dargestellten Ausführungsbeispiels ist in Figur 2 dargestellt. Im der Abwandlung des Ausführungsbeispiels umfasst das auf die beschädigte Stelle 3 aufgetragene Lot 17 zwei Bestandteile, von denen der erste Bestandteil eine Schmelztemperatur aufweist, die deutlich niedriger ist, als die des Basismaterials des Bauteils 1. Der zweite Bestandteil weist hingegen eine Schmelztemperatur auf, die im Bereich zwischen der Schmelztemperatur des ersten Bestandteils und der Schmelztemperatur des Basismaterials liegt. Außerdem weist der zweite Bestandteil insbesondere auch eine hohe Festigkeit etwa in der Größenordnung des Basismaterials auf.

Das Auftragen des pulverförmigen Lots 17 auf die vorgereinigte beschädigte Stelle 3 erfolgt derart, dass zuerst eine Lotzusammensetzung 18 aufgetragen wird, in welcher der erste Bestandteil einen relativ hohen Anteil am Pulver ausmacht. Anschließend wird eine Lotzusammensetzung 19 aufgetragen, in der der erste Bestandteil gegenüber dem zweiten Bestandteil verringert ist. Wenn nun ein Verlöten des Lots 17 mit dem Basismaterial erfolgt, erleichtert der hohe Anteil des ersten Bestandteils, also des Bestandteils mit der niedrigen Schmelztemperatur, ein einfaches Verlöten des Lots mit dem Basismaterial, wohingegen die Lotzusammensetzung 19, in dem der Anteil des ersten Bestandteils verringert ist, eine höhere Festigkeit der reparierten Stelle gewährleistet.

Ebenso ist es möglich, dass die Lotzusammensetzung 18 eine höhere Festigkeit der zu reparierenden Stelle 3 gewährleistet und die oberflächennähere Lotzusammensetzung 19 einen höheren Oxidations- und/oder Korrosionsschutz aufweist.
Statt diesem zweischichtigen Aufbau des Lots 7 kann das Lot 7 in der zu reparierenden Stelle 3 einen Materialgradienten vom Grund der Stelle 3 bis zur Oberfläche 5 des Bauteils aufweisen, in dem sich die Zusammensetzung des Lots 7 kontinuierlich verändert.

In beiden Ausführungsvarianten des erfindungsgemäßen Verfahrens ist es auch möglich, die Wärmeeinwirkung zum Verlöten des Lotes 7, 17 mit dem Basismaterial des Bauteils 1 gleichzeitig zum Durchführen einer Wärmebehandlung des Basismaterials zu verwenden, um so eine Wiederaufbereitung (Rejuvenation) der Basismaterialeigenschaften zu ermöglichen.

Im beschriebenen Ausführungsbeispiel und seiner Abwandlung wird das Lot in Pulverform auf die zu reparierende Stelle aufgetragen. Alternativ kann es jedoch auch als Folie oder Paste aufgetragen werden.
Das Pulver des Lots liegt beispielsweise als Nanopulver vor, d. h. die Korngrößen des Pulvers sind kleiner 500 oder kleiner 300 oder kleiner 100 Nanometer. Es hat sich nämlich herausgestellt, dass ein Lot aus Nanopulver eine niedrigere Schmelztemperatur gegenüber einem konventionellen Pulver mit mikrometergroßen Körnern aufweist. Ebenso kann das Pulver des Lots aus einem Gemisch von Nanopulver und konventionellen Pulver, d. h. einem Pulver, das Korngrößen im Mikrometerbereich aufweist, bestehen. Dadurch kann die Schmelzpunkterniedrigung gezielt eingestellt werden.
Ebenso kann die Folie oder Paste, mittels der das Lot aufgetragen wird, teilweise oder ganz ein Pulver aus Nanopulver aufweisen.
Der Vorteil gegenüber dem Stand der Technik besteht darin, dass hier das Pulver nicht über einen Pulverförderer zugeführt wird, sondern bereits verdichtet der zu reparierenden Stelle 3 zugeführt wird. Ein Nanopulver über eine Düse einer zu reparierenden Stelle zu zuführen, wie es aus dem Stand der Technik bekannt ist, ist fast unmöglich, da die Körner des Nanopulvers viel zu klein sind und sich sehr breit streuen würden.

## Patentansprüche

1. Reparaturverfahren zum Reparieren eines Bauteils (1), welches ein Basismaterial mit einer gerichteten Mikrostruktur umfasst,
bei dem ein Lot (7, 17) im Bereich einer zu reparierenden Stelle (3) aufgebracht wird,
wobei das Lot (7, 17) einen Bestandteil umfasst, dessen Schmelztemperatur niedriger ist als die Schmelztemperatur des Basismaterials, und
anschließend mittels Wärmeeinwirkung mit dem Bauteil (1) verlötet wird,
**gekennzeichnet dadurch, dass** die Wärmeinwirkung durch Bestrahlung des Lots (7, 17) durch einen Laser (9) erfolgt,
wobei ein Aufschmelzen des Lotes (7), nicht jedoch des Basismaterials des Bauteils (1) erfolgt,
wobei eine Relativgeschwindigkeit des Laserstrahles und Bauteils (1) zueinander oder die Laserleistung oder
eine Erwärmung oder eine Kühlung auf der Rückseite gegenüber der Beschädigung (3) so gewählt wird,
dass ein Temperaturgradient im Bereich der zu reparierenden Stelle (3) erzeugt wird,
so dass dieselbe gerichtete Mikrostruktur in der reparierten Stelle (3) wie das umgebende Basismaterial erzeugt wird.

2. Reparaturverfahren nach Anspruch 1,
**dadurch gekennzeichnet, dass**
der Temperaturgradient derart ausgerichtet ist, dass er in Richtung der Orientierung der gerichteten Mikrostruktur des Basismaterials des Bauteils (1) verläuft.

3. Reparaturverfahren nach Anspruch 1 oder Anspruch 2,
**dadurch gekennzeichnet, dass**
das Lot (17) einen ersten Bestandteil mit einer Schmelztemperatur, die niedriger ist, als die Schmelztemperatur des Basismaterials des Bauteils (1), und einen zweiten Bestandteil mit einer hohen Widerstandsfähigkeit und einer Schmelztemperatur, die über der Schmelztemperatur des ersten Bestandteils aber unterhalb der Schmelztemperatur des Basismaterials bis hin zur Schmelztemperatur des Basismaterials liegt, umfasst und dass das Lot (17) derart im Bereich der zu lötenden Stelle (3) aufgebracht wird, dass der Anteil an erstem Bestandteil im Lot (17) in der Nähe (18) des Basismaterials höher ist, als in einem vom Basismaterial weiter entfernten Bereich (19).

4. Reparaturverfahren nach einem der Ansprüche 1 bis 3,
bei dem eine Wärmebehandlung des Basismaterials in den Prozess des Verlötens des Lotes (7, 17) integriert ist.

5. Reparaturverfahren nach einem der vorherigen Ansprüche,
**dadurch gekennzeichnet, dass**
das Pulver des Lots (7, 17) zumindest teilweise, insbesondere ganz aus Nanopulver besteht.

6. Reparaturverfahren nach einem der vorherigen Ansprüche,
**dadurch gekennzeichnet, dass**
das Lot (7, 17) in Form einer Paste oder einer Folie in die zu reparierende Stelle (3) eingebracht wird.

## Claims

1. Repair method for repairing a component (1) which comprises a base material with an oriented microstructure,
wherein a solder (7, 17) is applied in the region of a site (3) to be repaired,
the solder (7, 17) comprising a constituent whose melting temperature is lower than the melting temperature of the base material, and
is subsequently soldered to the component (1) by means of a heating effect **characterized in that** the heating effect is created by irradiating the solder (7, 17) with a laser (9),
the solder (7) being melted but not the base material of the component (1),
a relative speed of the laser beam and the component (1) in relation to each other or
the power of the laser or
heating or cooling on the rear side opposite the damage (3) being chosen such that
a temperature gradient is generated in the region of the site (3) to be repaired,
so that the same oriented microstructure is generated in the repaired site (3) as the surrounding base material.

2. Repair method according to Claim 1, **characterized in that**
the temperature gradient is aligned so that it extends in the direction of the orientation of the oriented microstructure of the base material of the component (1).

3. Repair method according to Claim 1 or Claim 2, **characterized in that**
the solder (17) comprises a first constituent with a melting temperature which is lower than the melting temperature of the base material of the component (1) and a second constituent with a high durability and a melting temperature which lies above the melting temperature of the first constituent but below the melting temperature of the base material down to the melting temperature of the base material, and **in that** the solder (17) is applied in the region of the site (3) to be soldered so that the proportion of first constituent in the solder (17) in the vicinity (18) of the base material is higher than in a region (19) further away from the base material.

4. Repair method according to one of Claims 1 to 3, wherein a heat treatment of the base material is integrated into the process of soldering the solder (7, 17).

5. Repair method according to one of the preceding claims, **characterized in that**
the powder of the solder (7, 17) consists at least partially, in particular fully of nanopowder.

6. Repair method according to one of the preceding claims, **characterized in that**
the solder (7, 17) is introduced in the form of a paste or a film into the site (3) to be repaired.

## Revendications

1. Procédé de réparation d'une pièce ( 1 ) qui comprend un matériau de base ayant une microstructure dirigée,
dans lequel on dépose une brasure ( 7, 17 ) dans la région d'un emplacement à réparer,
la brasure ( 7 ) comprenant un constituant,
dont le point de fusion est le plus bas que le point de fusion du matériau de base et,
on la brase ensuite avec la pièce ( 1 ) sous l'action de la chaleur **caractérisé en ce que,**
l'action de la chaleur s'effectue en exposant la brasure ( 7, 17 ) à un laser ( 9 ),
dans lequel on effectue une fusion de la brasure ( 7 ), mais non du matériau de base de la pièce ( 1 ),
dans lequel on choisit une vitesse relative du faisceau laser et de la pièce ( 1 ) l'un par rapport à l'autre ou
la puissance du laser ou
un échauffement ou un refroidissement de la face arrière vis-à-vis de l'endommagement ( 3 )
de manière à obtenir un gradient de température dans la région de l'emplacement ( 3 ) à réparer,
de manière à produire la même microstructure dirigée dans l'emplacement ( 3 ) à réparer que dans le matériau de base qui l'entoure.

2. Procédé de réparation suivant la revendication 1, **caractérisé en ce que,**
On dirige le gradient à une température de manière à ce qu'il s'étende dans la direction de l'orientation de la structure dirigée du matériau de base de la pièce ( 1 ).

3. Procédé de réparation suivant la revendication 1 ou 2, **caractérisé en ce que**
la brasure ( 7 ) comprend un premier constituant ayant un point de fusion qui est plus bas que celui du matériau de base de la pièce ( 1 ) et un deuxième constituant ayant une grande capacité de résistance et un point de fusion qui est supérieur au point de fusion du premier constituant mais inférieur au point de fusion du matériau de base en allant jusqu'au point de fusion du matériau de base, et **en ce que** l'on dépose la brasure ( 7 ) dans la région de l'emplacement ( 3 ) à braser, de sorte que la proportion du premier constituant, dans la brasure ( 17 ) est plus grande à proximité ( 18 ) de matériau de base que dans une région ( 19 ) plus éloignée du matériau de base.

4. Procédé de réparation suivant l'une des revendications 1 à 3, dans lequel un traitement thermique du matériau de base est intégré au processus de brasage de la brasure ( 7, 17 ).

5. Procédé de réparation suivant l'une des revendications précédentes, **caractérisé en ce que** la poudre de la brasure ( 7, 17 ) est constituée au moins en partie notamment entièrement de nanopoudre.

6. Procédé de réparation l'une des revendications précédentes, **caractérisé en ce que** la brasure ( 7, 17 ) est introduite sous la forme d'une pâte ou d'un ruban dans l'emplacement ( 3 ) à réparer.
